# EUROPEAN PATENT SPECIFICATION

(11) **EP 3 215 348 B1**
(45) Date of publication and mention of the grant of the patent: **17.02.2021**
(21) Application number: 15717269.3
(22) Date of filing: 30.03.2015
(51) Int. Cl.: B29C 64/393, B29C 64/307

(54) **SYSTEM FOR IDENTIFICATION OF A PRINTING MATERIAL OF 3D PRINTER**
SYSTEM ZUR IDENTIFIZIERUNG EINES DRUCKMATERIALS EINES 3D-DRUCKERS
SYSTÈME POUR L'IDENTIFICATION D'UN MATÉRIAU D'IMPRESSION D'UNE IMPRIMANTE 3D

(30) Priority: 03.11.2014 PL 41003514
(43) Date of publication of application: 13.09.2017
(73) Proprietor: ZORTRAX S.A., 10-409 Olsztyn (PL)
(72) Inventor: TOMASIAK, Rafal, 10-117 Olsztyn (PL)
(74) Representative: Kancelaria Eupatent.pl Sp. z.o.o
(86) International application number: PCT/PL2015/000054
(87) International publication number: WO 2016/072870

(56) References cited:
- EP-A2- 2 607 057
- CN-U- 203 713 074
- US-A1- 2003 186 009
- US-A1- 2013 075 954

## Description

The present invention relates to a system for identification of a printing material of 3D printer.

The aim of the printing by means of a 3D printer is to obtain the product as a solid object of three-dimensional geometry having the definite geometric and physicochemical parameters.

The main factor determining achievement of printing effect is a proper choice of material supplied to the printer's extruder (head) and - closely associated with it - selection of appropriate parameters of the printer. Improper, for applied printing material, printer's controller settings determining such parameters as temperature or speed of device actuator can affect the quality of the printed object, as well as the reduction of device durability, and even can lead to its damage.

The currently applied methods for setting the printer operating parameters, concerning material to be printed, are predominantly focused on manual records of parameters - appropriate for a given material - into printer memory by an operator interface, comprising a keyboard and display, based on characteristic of the material, provided by the manufacturer.

Another solution, implemented e.g. in the Cube3D printer is the automatic recording of material data into printer's controller memory by means of connection executed in a form of contact areas, placed inside the printer housing, and corresponding of contact areas on the cassette of material tray. US 2013/075954 A1 discloses a 3D printer and a cartridge adapted to receive a radio frequency identification tag.

Present invention provides a system for identifying printing material according to the appended claim 1.

The solution being subject of the invention increases an operational reliability of the printer through the use of wireless data transmission. Such a solution allows elimination of contact elements, through which - in the other methods of communication - flows signal carrying information, but in case of contamination, as a result of long-term use in a different conditions, it can significantly reduce the operational advantages of the device.

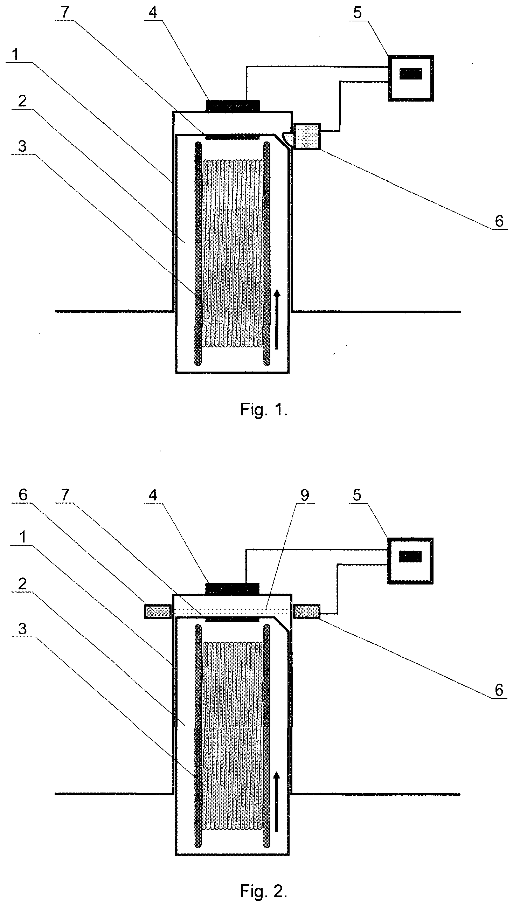

The subject of invention will be described in the embodiments, in which
fig. 1 shows a system - equipped with an electromechanical detector of the material tray presence - for identifying printing material of 3D printer.
Fig. 2 shows a different arrangement, not part of the present invention, with an optical detector of the material tray presence.

### Example 1

In the system for the identification of the printing material of the 3D printer, the printer is equipped with a mounting seating 1 of a tray 2 of a material 3, to which is attached a reader system 4 of the Radio Frequency Identification (RFID) code, which is connected to a printer controller 5. In the seating 1 of a tray 2 of a material 3 there is placed a presence detector 6 of the tray 2 of the material 3, which is connected with the printer controller 5.

To the tray 2 of the printer material 3 there is attached a label system 7 of the RFID, in a position that allows the effective contact by the RFID radio waves with the reader system 4 of the RFID code in the seating 1.

The tray 2 of the material 3 of the printer is connected to the mounting seating 1 so that the housing of the tray 2 causes a direct influence on detector 6 of the tray 2 presence.

Identification of the material is carried out by placing the tray 2 of the material 3 in the seating 1. Placing the tray 2 in the seating 1 will cause an impact of the tray 2 on the presence detector 6, which transfers an informing signal to the printer controller 5 about change of the detector 6 state. The reaction of the printer controller 5 for change of the detector 6 state is the 4 RFID reader activation and starting the exchange of information between the system of label system 7 memory of the RFID and memory controller 5 of the printer. When information exchange is complete the reader 4 automatically reaches an inactive state.

In the event that during the operation the printer controller 5 needs to verify the read data, or modify the data which are put in the memory label 7, it can reactivate the reader 4, prior making sure - by reading the state of the detector 6 - whether material tray 2 is placed in the seating 1.

### Example 2 (not part of the invention)

In the system for the identification of the printing material of the 3D printer is the printer is equipped with a mounting seating 1 of a tray 2 of a material 3, to which is attached a reader system 4 of the Radio Frequency Identification (RFID) code, which is connected to a printer controller 5. In seating 1 of a tray 2 of a material 3 on both sides is placed an optical detector 6 - of the above mentioned tray presence - which is connected with the printer controller 5.

To the tray 2 of the printer material 3 there is attached a label system 7 of the RFID, in a position that allows to maintain the effective contact by the RFID radio waves with the reader system 4 of the RFID code in the seating 1.

### Operation of system with an optical detector

The tray 2 of the material 3 of the printer is connected to the mounting seating 1 so that the housing of the tray 2 causes a direct influence on detector 6 of the tray 2 presence.

Identification of the material is carried out by placing the tray 2 of the material 3 in the seating 1. Placing a tray 2 in seating 1 will cause veiling of the light beam between elements of the presence detector 6, which transfers an informing signal to the printer controller 5 about change of the detector 6 state. The reaction of the printer controller 5 for change of the detector 6 state is the 4 RFID reader activation and starting the exchange of information between the system of label system 7 memory of the RFID and memory controller 5 of the printer. When information exchange is complete the reader 4 automatically reaches an inactive status.

In the event that during the operation the printer controller 5 needs to verify the read data, or modify the data which are put in the memory label 7, it can reactivate the reader 4, prior making sure - by reading status of the detector 6 - whether material tray 2 is placed in the seating 1.

## Claims

1. A system for identification of a printing material of a 3D printer, the system comprising:
- a tray (2) comprising the printing material (3);
- a mounting seating (1) for the tray (2);
- a reader system (4) ;
- a printer controller (5);
- a detector (6);
- and an RFID label system (7);
- whereby to the mounting seating (1) there is attached the reader system (4) of a Radio Frequency Identification (RFID) code, which is connected to the printer controller (5), wherein in the mounting seating (1) there is arranged the detector (6) of a presence of the tray (2) comprising the printing material (3), wherein the detector (6) is connected with the printer controller (5), and wherein to the tray (2) comprising the printing material (3) there is attached the RFID label system (7) in a position that allows effective contact of the RFID label system (7) via RFID radio waves with the reader system (4);
- and whereby the system is configured such that placing the tray (2) in the seating (1) causes an impact of the tray (2) on the presence detector (6), which transfers an informing signal to the printer controller (5) about a change of a state of the detector (6) which causes the controller (5) to activate the reader system (4) and to start an exchange of information between a memory of the RFID label system (7) and a memory of the printer controller (5);
- whereby when the exchange of information is complete, the reader system (4) automatically reaches an inactive state.

## Patentansprüche

1. System zur Identifizierung eines Druckmaterials eines 3D-Druckers, wobei das System folgendes umfasst:
- ein Fach (2), welches das Druckmaterial (3) umfasst;
- eine Befestigungshalterung (1) für das Fach (2);
- ein Lesersystem (4);
- eine Druckersteuereinheit (5);
- einen Detektor (6)
- und ein RFID-Etikettierungssystem (7);
- wobei das mit der Druckersteuereinheit (5) verbundene Lesersystem (4) eines Codes zur Radiofrequenz-Identifikation (RFID) an der Befestigungshalterung (1) angebracht ist, wobei der Detektor (6) zur Erkennung der Präsenz des das Druckmaterial (3) umfassenden Faches (2) in der Befestigungshalterung (1) angeordnet ist, wobei der Detektor (6) mit der Druckersteuereinheit (5) verbunden ist, und wobei das RFID-Etikettierungssystem (7) an dem das Druckmaterial (3) umfassenden Fach (2) an einer Position angebracht ist, die einen effektiven Kontakt des RFID-Etikettierungssystems (7) über RFID-Funkwellen mit dem Lesersystem (4) ermöglicht;
- und wobei das System so gestaltet ist, dass eine Platzierung des Faches (2) in der Halterung (1) eine Einwirkung des Faches (2) auf den Präsenzdetektor (6) bewirkt, welche ein Informationssignal an die Druckersteuereinheit (5) bezüglich einer Veränderung eines Zustands des Detektors (6) überträgt, was bewirkt, dass die Steuereinheit (5) das Lesersystem (4) aktiviert und einen Informationsaustausch zwischen einem Speicher des RFID-Etikettierungssystem (7) und einem Speicher der Druckersteuereinheit (5) startet;
- wobei, wenn der Informationsaustausch abgeschlossen ist, das Lesersystem (4) automatisch in einen inaktiven Zustand eintritt.

## Revendications

1. Système pour l'identification d'un matériau d'impression d'une imprimante 3D, le système comprenant :
- un plateau (2) comprenant le matériau d'impression (3) ;
- un siège de montage (1) pour le plateau (2) ;
- un système de lecteur (4) ;
- un contrôleur d'imprimante (5) ;
- un détecteur (6) ;
- et un système d'étiquette RFID (7) ;
- le système de lecteur (4) d'un code d'identification par radiofréquence (RFID) étant attaché au siège de montage (1), qui est connecté au contrôleur d'imprimante (5), le détecteur (6) d'une présence du plateau (2) comprenant le matériau d'impression (3) étant agencé dans le siège de montage (1), le détecteur (6) étant connecté avec le contrôleur d'imprimante (5), et le système d'étiquette RFID (7) étant attaché au plateau (2) comprenant le matériau d'impression (3) dans une position qui permet un contact effectif du système d'étiquette RFID (7) par le biais d'ondes radio RFID avec le système de lecteur (4) ;
- et le système étant configuré de telle sorte que la disposition du plateau (2) dans le siège (1) provoque un impact du plateau (2) sur le détecteur de présence (6), qui transfère un signal d'information au contrôleur d'imprimante (5) concernant un changement d'un état du détecteur (6) qui amène le contrôleur (5) à activer le système de lecteur (4) et à démarrer un échange d'informations entre une mémoire du système d'étiquette RFID (7) et une mémoire du contrôleur d'imprimante (5) ;
- lorsque l'échange d'informations est achevé, le système de lecteur (4) atteignant automatiquement un état inactif.
